# EUROPEAN PATENT APPLICATION

(11) **EP 1 387 120 A1**
(43) Date of publication of application: **04.02.2004**
(21) Application number: 03254572.5
(22) Date of filing: 22.07.2003
(51) Int. Cl.: F16M 11/08

(54) **Turntable**

(30) Priority: 29.07.2002 GB 0217495
(71) Applicant: Titus International PLC, Iver, Buckinghamshire SL0 9HW (GB)
(72) Inventor: Vallance, William Ernest Taylor, Marlow Buckinghamshire SL7 3QB (GB); Sutherland, Richard, Kington Herefordshire HR5 3LT (GB)
(74) Representative: Pendered, Timothy George

(57) **Abstract**

A turntable is provided which comprises a central hub member (10) to which are connectable a number of radial arms (11). A number of roller elements (12) are rotatably mountable both to the hub member and to the radial arms. The hub member and radial arms are constrained to rotate about a central axis by means of a pin locating in a bore (13) in the hub member. The number and length of radial arms that are connected to the hub member can be varied, as can the number and positioning of the roller elements. The turntable is therefore modular and can be assembled into any number of different configurations to suit different applications.

## Description

This invention relates to turntables and in particular to turntables for mounting equipment such as television sets or computers for swivelling or rotational movement relative to the furniture on which they are supported.

According to the invention there is provided a turntable for providing rotatable support in use between a load or a load carrying member and a supporting surface, the turntable comprising a mounting assembly, means defining an axis for the mounting assembly to turn about, and at least three roller elements, wherein said mounting assembly comprises means for rotatably mounting said roller elements whereby the weight of said load or load carrying member is transferred to said supporting surface via the roller elements, the roller elements being mounted for rotation about respective axes substantially at right angles to said turning axis, and the respective axes of the roller elements being in radial alignment with said turning axis, wherein the turntable is modular and said roller element mounting means are provided on the mounting assembly at more than three locations to enable said roller elements to be mounted optionally in different numbers and/or at different positions relative to the turning axis.

By way of example, an embodiment of the invention will now be described with reference to the accompanying drawings, in which:
Figure 1 is a perspective view of a turntable according to the invention;
Figure 2 is an enlargement of a portion of Figure 1;
Figure 3 is a plan view of a leg of the turntable shown in Figure 1;
Figure 4 shows a roller element from the turntable shown in Figure 1;
Figure 5 is a detail from Figure 1 showing a roller element assembled in an arm;
Figure 6 is an exploded view showing the turntable in use; and
Figure 7 is a perspective view of an alternative form of the turntable.

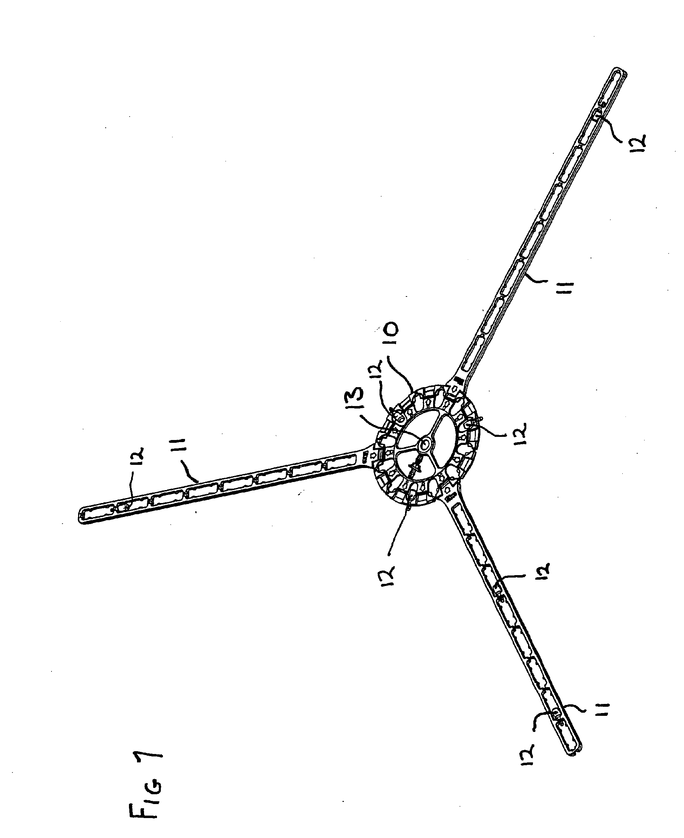

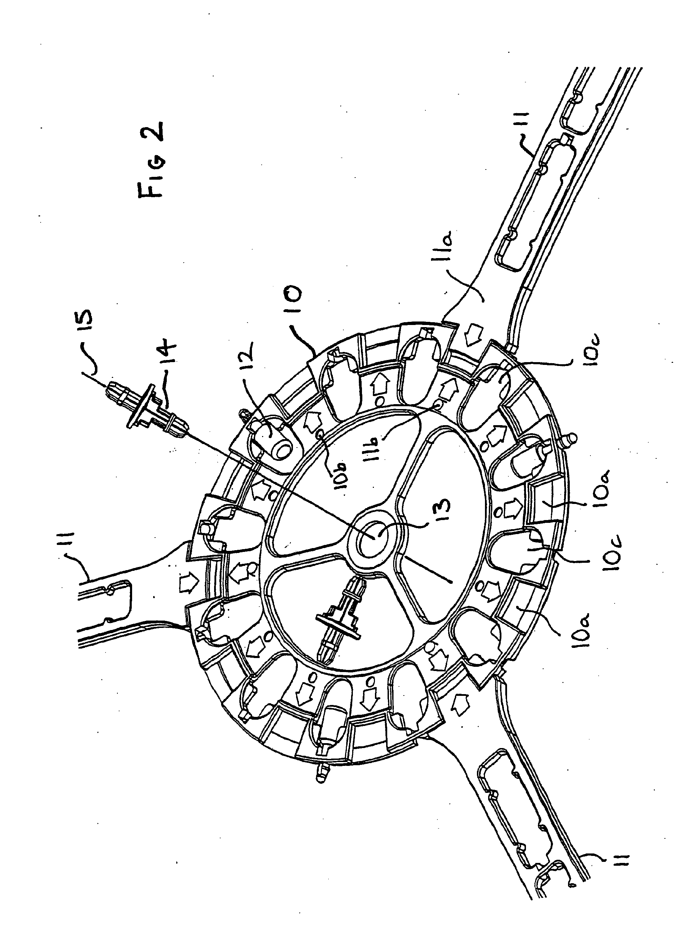

The turntable seen in Figures 1 and 2 is modular and comprises a hub 10 from which three elongate arms 11 extend radially outwardly. The hub 10 is of generally circular shape and the arms 11 are situated at equal angular spacing around its circumference. The hub 10 and arms 11 lie in a generally flat plane. A number of rollers 12 are rotatably mounted in the hub 10 and arms 11, in this case, three in the hub and two in one arm and one in each of the other two arms. At its centre, the hub 10 has a hole 13. This is to receive a pin 14 to act as a vertical axis 15 about which the hub 10 can rotate. In Figure 2, the pin 14 is shown twice. Once in attachment to the hub with which it is preferably integrally moulded and once in readiness to be inserted in the hole 13. As will be seen, each of the rollers 12 is mounted with its axis of rotation 12b (Figure 4) parallel to the plane of the hub and arms and aligned radially with respect to the axis of rotation 15 of the hub and generally perpendicular to it.

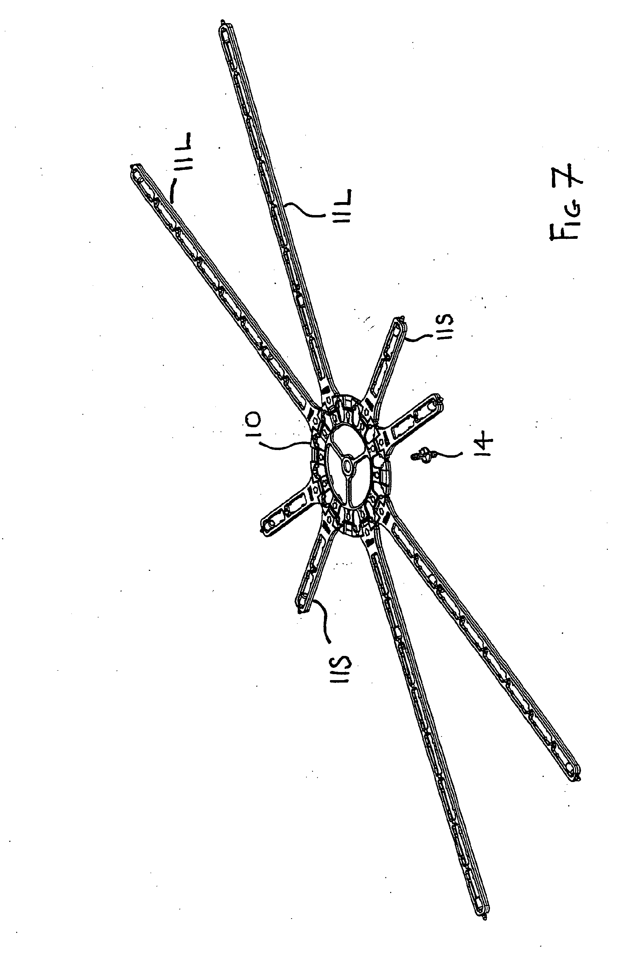

The turntable is designed to act in use as a bearing between a platen 50 and a support surface 51, allowing swivelling or rotational movement of the platen relative to the support surface about the turning axis 15 (see Figure 6).

The support surface 51 will typically be on a piece of furniture such as a desk. The platen 50 will typically be designed to carry an item such as a television set or computer. In use, the pin 14 would be fitted with one end in a hole 52 in the support surface 51 and with the other end in a hole 53 in the platen 50. In this way, the platen 50 is constrained to move relative to the support surface 51 about vertical axis 15. Instead of the platen 50, it might in some circumstances be appropriate to mount an item directly onto the turntable. In this case, the pin member could be configured so that an end can be broken off and be replaced by some form of friction pad to allow for use with items not having a hole, such as the hole 53, for receiving the pin member. A further option would be to replace the portion of the pin that would normally received in the hole 52, with a friction pad. This would make it possible to use the turntable on surfaces in which, for whatever reason, it is not desired to provide a hole such as the hole 52 but would still constrain the load to move relative to the support surface about vertical axis 51.

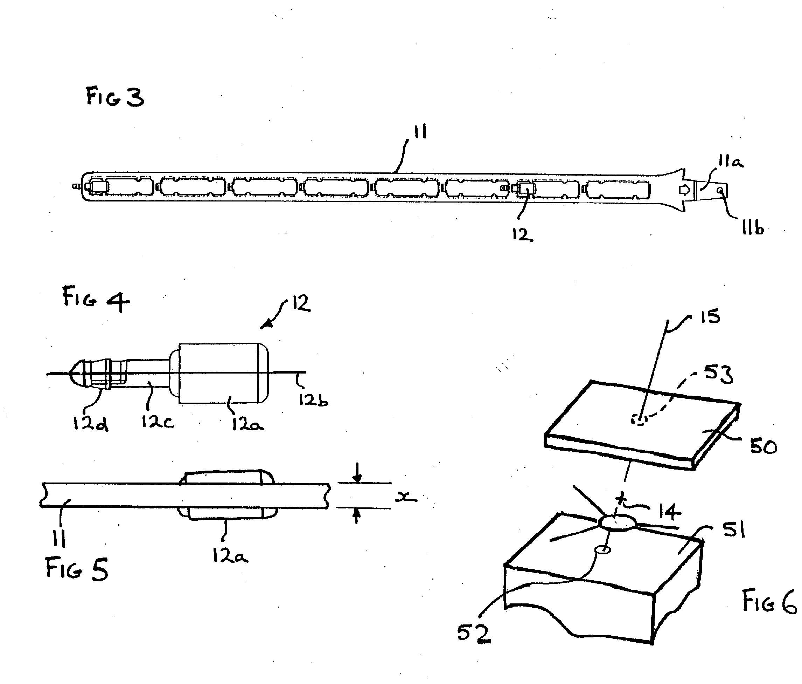

The rollers 12 have a major outer diameter portion 12a, which is greater than the thickness x of the hub 10 and arms 11 (see Figure 5). This means that the platen 50 will effectively be mounted on the support surface 51 solely via rollers 12. Because the axes of rotation 12b of the rollers 12 are all radially aligned with turning axis 15, the platen 50 (and whatever object it may be carrying) can be easily swivelled or rotated, with the rollers acting like roller bearings.

In the turntable seen in the drawings, the hub 10 and arms 11 are made as separate parts. Each arm 11 has a specially configured radially inner end portion 11 a to enable it to be connected to the hub 10. The hub 10 has a plurality of complementarily configured radial slots 10a around its circumference for connection of the arms 11. In the example shown, the hub 10 has twelve such slots 10a, allowing up to twelve arms 11 to be attached. The radial slots 10a are designed to hold each arm 11 laterally in position, whilst a lug 11b on each arm 11 snap-fits into a hole 10b in the hub 10 to attach the arm to the hub.

The rollers 12 that are to be mounted in the hub 10 are conveniently the same as those to be mounted in the arms 11. In the example shown, the hub 10 can rotatably mount up to twelve rollers 12 in holes 10c, in angular positions alternating with the radial slots 10a for mounting the arms 11. As seen in Figure 2, each roller 12 has a spindle 12c extending from its major diameter portion 12a, the spindle being designed to be journalled in holes 10c in the hub 10 or in holes 11 c in the arm 11. A collar 12d is provided on the spindle 12c of each roller 12 to act to retain it in position after it has been snap-fitted into its mounting hole in the hub or arm.

In the example shown, the arm 11 has mounting holes for receiving up to eight rollers 12, but has only one or two fitted. Of course, the length of the arm 11 could be varied so as to have capacity for mounting a greater or lesser number of rollers 12. Alternatively, instead of producing a number of arms of various different lengths, it would be possible to design a single, modular form of arm with connection features at each respective end to enable its attachment optionally either to the hub or to another similar arm. In this way, arms of different radial lengths can be made up from a number of standard units joined together.

Because of its modular design, the turntable can be made up into a great many different configurations, enabling it to be tailored to almost any particular application. Thus, for a small, lower-load application such as a food carousel, for example, it may only be necessary to use the hub 10 and three rollers 12. For a bigger, heavier-load application, on the other hand, such as a large television set, it may be necessary to spread the load both in terms of numbers of rollers 12 used and their disposition about the turning axis 15, necessitating adding a number of arms 11 and using a multiplicity of rollers 12, as in Figure 1.

The modular form of the turntable lends itself well to adaptation for use in asymmetric applications, as for example in Figure 7 where a large television set is to be supported. This illustrates how the load between the platen 50 and support surface 51 can be spread effectively around turning axis 15 using a combination of shorter arms 11S and longer arms 11L connected to the hub 10.

It will be understood that the turntable can be used for applications where the load or load carrying member is intended to be able to rotate fully about the turning axis 15 as well as applications where only a limited amount of swivelling movement is intended. In the latter case, stops will preferably be provided to limit the angular movement of the turntable. An example of a situation where limiting the amount of swivelling movement would be desirable is where the support surface is not of sufficient size to permit complete rotation of long arms such as the arms 11L shown in Figure 7.

The hub and arms in the turntable do not need to have great strength and they can therefore be made of plastics material, conveniently in a moulding process. The rollers do not need great strength either, other than in compression across their major diameter, and these too can be made of moulded plastics. Because of its modular design, the turntable can be made up into an enormous range of different configurations using only a very small number of different parts.

## Claims

1. A turntable for providing rotatable support in use between a load or a load carrying member and a supporting surface, the turntable comprising a mounting assembly, means defining an axis for the mounting assembly to turn about, and at least three roller elements, wherein said mounting assembly comprises means for rotatably mounting said roller elements whereby the weight of the load or load carrying member is transferred to said supporting surface via the roller elements, the roller elements being mounted for rotation about respective axes substantially at right angles to said turning axis, and the respective axes of the roller elements being in radial alignment with said turning axis, wherein the turntable is modular and said roller element mounting means are provided on the mounting assembly at more than three locations to enable said roller elements to be mounted optionally in different numbers and/or at different positions relative to the turning axis.

2. A turntable as claimed in claim 1 wherein said mounting assembly comprises a single hub member.

3. A turntable as claimed in claim 2 wherein said mounting assembly further comprises one or more generally elongate arm members extending radially outwardly from said hub member, the or each said arm member comprising means for rotatably mounting at least one roller element.

4. A turntable as claimed in claim 3 wherein the or each arm member is releasably attachable to the hub member.

5. A turntable as claimed in claim 4 wherein the hub member has a number of discrete locations at which to attach the or each arm member.

6. A turntable as claimed in claim 4 or claim 5 wherein the hub member provides lateral support for the or each arm member when attached.

7. A turntable as claimed in any one of claims 3 to 6 wherein the or each arm member has means for rotatably mounting a roller element at a plurality of locations along is length.

8. A turntable as claimed in any one of claims 3 to 7 and comprising a number of said arm members of various different lengths.

9. A turntable as claimed in any one of claims 3 to 7 wherein the or each arm member is designed to be attachable by a first of its ends to the hub member and its opposite end is designed to enable attachment of another similar arm by that member's first end.

10. A turntable as claimed in any preceding claim wherein said roller elements are insertable into their rotatable mounting means in the mounting assembly by means of a resilient snap fitting.

11. A turntable as claimed in claim 10 and including means for retaining said roller elements in position after insertion into their rotatable mounting means.

12. A turntable as claimed in any preceding claim wherein said means defining a turning axis comprises a pin member insertable in use in respective holes in the load or load carrying member, the support surface and the mounting assembly.

13. A turntable as claimed in any one of claims 1 to 11, wherein said means defining a turning axis comprises a pin member insertable in use in respective holes in the load or load carrying member and the mounting assembly, one end of said pin member being provided with support surface engaging means for frictionally engaging the support surface.

14. A turntable as claimed in any preceding claim and further including means for limiting the range of possible angular movement of the load or load carrying member.
